(19)

**Europäisches Patentamt**
**European Patent Office**
**Office européen des brevets**

(11)  **EP 4 546 464 A1**

(12)  **EUROPEAN PATENT APPLICATION**
published in accordance with Art. 153(4) EPC

(43)  Date of publication:
**30.04.2025  Bulletin 2025/18**

(21)  Application number: **23827526.7**

(22)  Date of filing: **21.06.2023**

(51)  International Patent Classification (IPC):
$H01M\ 4/525^{(2010.01)}$      $H01M\ 4/505^{(2010.01)}$
$C01G\ 53/00^{(2025.01)}$      $H01M\ 10/052^{(2010.01)}$

(52)  Cooperative Patent Classification (CPC):
C01G 53/00; H01M 4/505; H01M 4/525;
H01M 10/052

(86)  International application number:
**PCT/KR2023/008637**

(87)  International publication number:
**WO 2023/249416 (28.12.2023 Gazette 2023/52)**

(84)  Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30)  Priority:  **21.06.2022  KR 20220075311**

(71)  Applicants:
  • **POSCO Holdings Inc.**
    **Seoul 06194 (KR)**
  • **RESEARCH INSTITUTE OF INDUSTRIAL
    SCIENCE &
    TECHNOLOGY
    Pohang-si, Gyeongsangbuk-do 37673 (KR)**
  • **Posco Future M Co., Ltd
    Pohang-si, Gyeongsangbuk-do 37918 (KR)**

(72)  Inventors:
  • **PARK, Inchul
    Incheon 22008 (KR)**

  • **KIM, Hyungsub
    Sejong 30123 (KR)**
  • **LEE, Sanghyuk
    Incheon 22405 (KR)**
  • **SONG, Jung Hoon
    Gwacheon-si, Gyeonggi-do 13835 (KR)**
  • **KIM, Junghoon
    Incheon 22003 (KR)**
  • **CHOI, Kwonyoung
    Seoul 07987 (KR)**
  • **KWON, Ohmin
    Incheon 22018 (KR)**
  • **NAM, Sang Cheol
    Seoul 02587 (KR)**
  • **SONG, Seok Hyun
    Daejeon 34057 (KR)**

(74)  Representative: **Pfenning, Meinig & Partner mbB
Patent- und Rechtsanwälte
Theresienhöhe 11a
80339 München (DE)**

(54)  **POSITIVE ELECTRODE ACTIVE MATERIAL FOR LITHIUM SECONDARY BATTERY, AND
PREPARATION METHOD THEREFOR**

(57)  **It** is related to a positive active material for a
lithium secondary battery and a manufacturing method
thereof, and is provided a positive active material which is
a layered metal oxide crystal structure including a lithium
layer and a metal layer, wherein, the crystal structure
includes a first metal layer in which some of the metal is
replaced by lithium, the crystal structure includes a first
lithium layer in which some of the lithium in the lithium
layer is replaced by metal, a substitution amount of
lithium in the first metal layer is 1.5 mol% or more, and
a nickel content is 80 mol% or more, with 100 mol% of
metal in the positive active material as the reference.

【FIG. 1】

EP 4 546 464 A1

**Description**

## FIELD OF THE INVENTION

It relates to a positive active material for a lithium secondary battery and a manufacturing method thereof.

## DESCRIPTION OF THE RELATED ART

Recently, with the expansion of demand for electric vehicles, the demand for lithium secondary batteries to power them is rapidly increasing. Layer-type lithium transition metal oxide ($LiMO_2$, M = Ni, Co, Mn, etc.) is mainly used as the positive active material for these lithium secondary batteries, and research on high-capacity production of this is actively being conducted. Among the existing layer-phase positive active materials, the ones with the highest capacity are $LiNiO_2$ and high-nickel layer-phase positive acitve materials, but stoichiometric synthesis is difficult due to the instability of Ni(III), and there is a problem that the electrochemical characteristics change significantly even with a small change in lithium in the synthesis process.

## SUMMARY OF THE INVENTION

We provide lithium-excessive high nickel-based positive active materials with high price competitiveness, high stability, and high energy density, as well as their manufacturing methods and lithium secondary batteries containing them.
In one embodiment of the present invention, it is provided that a positive active material is:
a layered metal oxide crystal structure including a lithium layer and a metal layer, wherein, the crystal structure includes a first metal layer in which some of the metal is replaced by lithium, the crystal structure includes a first lithium layer in which some of the lithium in the lithium layer is replaced by metal,@@@a substitution amount of lithium in the first metal layer is 1.5 mol% or more, and a nickel content is 80 mol% or more, with 100 mol% of metal in the positive active material as the reference.
The substitution amount of lithium in the first metal layer can be 1.5 mol% or more and 15 mol% or less.
The substitution amount of metal in the first lithium layer can be 0.5 mol% or more and 5 mol% or less.
The substitution amount of lithium in the first metal layer may be greater than the substitution amount of metal in the first lithium layer.
The difference between the substitution amount of lithium in the first metal layer and the substitution amount of metal in the first lithium layer may be 1 mol% or more and 15 mol% or less.
The mole ratio of lithium to the entire metal in the positive active material can be 1.01 or more and 1.2 or less.
The positive active material can have a c-axis lattice constant variation ratio of less than 2.5% for the R-3m structure under charge and discharge in the range of 2.5 V to 4.25 V.
The maximum value of the c-axis lattice constant of the R-3m structure can be less than 14.410 Å during charge and discharge in the range of 2.5 V to 4.25 V.
The c-axis lattice constant of the R-3m structure can change within the range of 13.900 Å to 14.410 Å during charge and discharge in the range of 2.5 V to 4.25 V.
The bond length between metal and oxygen in the positive active material can be less than 1.92 Å.
The content of $Li_2CO_3$ in the positive active material, as measured by X-ray diffraction analysis, can be less than 0.5 wt%.
The content of $Li_2O$ in the positive active material, as measured by X-ray diffraction analysis, may be less than 1.0 wt%.
The nickel content can be 90 mol% or more with 100 mol% metal reference in the positive active material.
In another embodiment of the present invention, it is provided that a positive active material is:
a layered metal oxide crystal structure comprising a lithium layer and a metal layer, wherein, the crystal structure includes a first metal layer in which some of the metal is replaced by lithium, the crystal structure includes a first lithium layer in which some of the lithium in the lithium layer is replaced by metal, and, an amount of lithium substitution in the first metal layer is greater than the amount of metal substitution in the first lithium layer.
In another embodiment of the present invention, it is provided that a method of manufacturing a positive active material, comprising:
preparing a metal hydroxide precursor and a lithium raw material; and mixing and sintering the metal hydroxide precursor and the lithium raw material; wherein, a sintering temperature is t, a mole ratio of lithium in the lithium raw material to metal in the metal oxide precursor is l/m, the t is 780°C or less, an equation 1 below is satisfied.

[equation 1]

$$500 \leq t / (l/m) \leq 710$$

More specifically, $530 \leq t / (l/m) \leq 710$, or $600 \leq t / (l/m) \leq 710$.

According to an embodiment of the present invention, a positive active material and a lithium secondary battery including the same have high price competitiveness, high stability, high energy density, high capacity, and high lifespan characteristics.

## BRIEF DESCRIPTION OF THE DRAWINGS

FIG. 1 is a schematic diagram showing the chemical structure of a lithium-excessive high nickel-based positive active material.

FIG. 2 is the X-ray diffraction pattern of the positive active material of the Comparative Example.

FIG. 3 is an X-ray diffraction pattern of the positive active material of an exemplary embodiment.

FIG. 4 is an X-ray diffraction pattern of the positive active material of an exemplary embodiment.

FIG. 5 is a graph showing the contents of $Li_2CO_3$ and $Li_2O$ remaining in the positive active material of Comparative Example.

FIG. 6 is a graph showing the contents of $Li_2CO_3$ and $Li_2O$ remaining in the positive active material of the exemplary embodiment.

FIG. 7 is a graph showing the contents of $Li_2CO_3$ and $Li_2O$ remaining in the positive active material of the exemplary embodiment.

FIG. 8 is a graph analyzing the nickel oxidation number of the positive active material of the Comparative Example.

FIG. 9 is a graph analyzing the nickel oxidation number of the positive active material of the exemplary embodiment.

FIG. 10 is a graph analyzing the nickel oxidation number of the positive active material of the exemplary embodiment.

FIG. 11 is a graph analyzing the lithium content within the positive active material structure of the exemplary embodiment and the comparative example.

FIG. 12 is a graph analyzing the cation mixing of the positive active material of the exemplary embodiment and the comparative example.

FIG. 13 is a graph showing the electrochemical characteristics of the battery in the Comparative Example.

FIG. 14 is a graph showing the electrochemical characteristics of the battery of the exemplary embodiment.

FIG. 15 is a graph showing the electrochemical characteristics of the battery of the exemplary embodiment.

FIG. 16 is a graph showing the lifespan characteristic for the battery of the Comparative Example.

FIG. 17 is a graph showing the lifespan characteristics of the battery of the exemplary embodiment.

FIG. 18 is a graph showing the lifespan characteristics of the battery of the exemplary embodiment.

FIG. 19 is a pair distribution function (PDF) analysis graph for the positive active material manufactured in Comparative Example.

FIG. 20 is a pair distribution function (PDF) analysis graph for the positive active material manufactured in the exemplary embodiment and the comparative example.

## DETAILED DESCRIPTION OF THE EMBODIMENTS

Below, an implementation example of the present invention will be described in detail. However, this is provided as an example and the present invention is not limited thereby, and the present invention is only defined by the scope of the claims described below.

In one embodiment of the present invention, it is provided that a positive active material is:

a layered metal oxide crystal structure including a lithium layer and a metal layer, wherein, the crystal structure includes a first metal layer in which some of the metal is replaced by lithium, the crystal structure includes a first lithium layer in which some of the lithium in the lithium layer is replaced by metal,@@@a substitution amount of lithium in the first metal layer is 1.5 mol% or more, and a nickel content is 80 mol% or more, with 100 mol% of metal in the positive active material as the reference.

The positive active material may be a layer-type positive active material in which transition metal layers and lithium layers exist repeatedly.

At this time, cation exchange can occur through appropriate control, and some lithium in the lithium layer can be mixed into the transition metal layer, and vice versa, metal in the transition metal layer can be mixed into the lithium layer.

At this time, the metal of the representative transition metal layer can be nickel.

The substitution amount of lithium in the first metal layer can be 1.5 mol% or more and 15 mol% or less.

More specifically, it can be 4.7 mol% or more and 15 mol% or less. Alternatively, it may be 6.2 mol% or more, 7.0 mol% or more, or 10.7 mol% or more. If this range is satisfied, an improved lifespan characteristic can be obtained.

The substitution amount of metal in the first lithium layer can be 0.5 mol% or more and 5 mol% or less. That is, the substitution amount of metal may be less than that of lithium. More specifically, it may be 4.7 mol% or less, or 3.3 mol% or less.

The difference between the substitution amount of lithium in the first metal layer and the substitution amount of metal in the first lithium layer may be 1 mol% or more and 15 mol% or less.

According to one embodiment, a positive active material for a lithium secondary battery is a lithium-excessive high nickel-based layer-type positive active material including a compound represented by the following Chemical Formula 1.

[Chemical Formula 1]     $Li_{1+a}(Ni_bM^1_{1-b})_{1-a}O_2$

In the above formula 1, $0<a\leq0.3$, $0.8<b<1$, $M^1$ is one or more elements selected from Co, Mn, Al, Mg, Ca, Ti, V, Cr, Zr, Nb, Mo, and W. (more specifically, $0<a<0.2$)

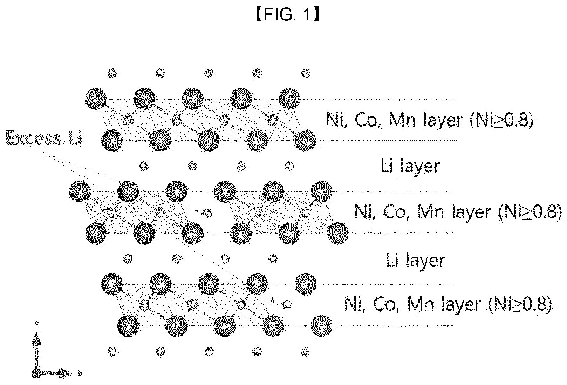

Here, lithium excess means that excess lithium has entered the active material structure, and some of the transition metal sites are occupied by lithium. FIG. 1 is a drawing showing the chemical structure of a positive active material according to an embodiment of the present invention, showing a structure in which excess lithium is included in some of the transition metal sites such as Ni, Co, and/or Mn. According to one embodiment, the molar content of lithium present in the structure of the positive active material is 1.02 to 1.15 per mole of the positive active material.

The molar content of lithium can be measured, for example, by neutron diffraction analysis. The molar content of lithium present in the positive active material structure can be expressed as 1.02 to 1.30 per mole of compound represented by the above formula 1. In the formula 1 above, the range of a in (1+a), which represents the content of lithium in the active material structure, can be, for example, $0.005\leq a\leq0.19$, $0.01\leq a\leq0.17$, or $0.02\leq a\leq0.15$.

Also, the high nickel series means that the content of nickel in the active material is high, and specifically, it can mean that the content of nickel is more than 80 mol% with reference to the content of entire transition metal excluding lithium, and for example, the content of nickel can be 81 mol% or more, 85 mol% or more, 89 mol% or more, 90 mol% or more, or 92 mol% or more. In the above formula 1, the b value representing the nickel content can be, for example, $0.81\leq b\leq0.99$, $0.83\leq b\leq0.99$, $0.85\leq b\leq0.99$, $0.87\leq b\leq0.99$, $0.89\leq b\leq0.99$, $0.90\leq b\leq0.99$, $0.91\leq b\leq0.99$, $0.92\leq b\leq0.99$, or $0.81\leq b\leq0.98$.

That is, the positive active material according to one embodiment is a high nickel material having a nickel content exceeding 80 mol% and a lithium-rich active material having 1.02 to 1.15 mol% lithium in the active material structure.

In general, high nickel-based positive active materials implement high capacity, but first of all, the synthesis itself is difficult, and it is difficult to secure structural stability. In addition, even if synthesized, the phenomenon of cation mixing in which $Ni^{2+}$ ions occupy lithium sites increases, which frequently causes a problem of decreased capacity, and it is difficult to secure battery safety. When lithium raw materials are excessively added during synthesis to lower cation mixing and increase capacity, lithium often does not enter the active material structure but remains in the form of impurities such as $Li_2CO_3$ or $Li_2O$, and these impurities often reduce the battery capacity and cause stability problems.

Accordingly, the present inventors found that the electrochemical characteristics of lithium-rich high nickel-based layer-type positive active materials significantly change with changes in the fine lithium composition and synthesis temperature. When synthesis is performed at a specific temperature range within a specific lithium content range, a structure can be manufactured in which a very high nickel content and a certain amount of lithium are incorporated into the active material structure. A stable positive active material with a c-axis lattice constant variation ratio of less than 2.3% in the R-3m structure according to charge and discharge in the range of 2.5 V to 4.25 V can be successfully synthesized. In addition, it was confirmed that the synthesized positive active material improved the lifespan characteristics and stability of the battery while implementing high capacity and high energy density.

According to an embodiment of the present invention, a lithium-excessive high nickel-based layer-type positive active material has a change in c-axis lattice constant of less than 2.3% when charge and discharge are performed in the range of 2.5 V to 4.25 V. Specifically, a lithium secondary battery using the positive active material is charged and discharged in the range of 2.5 V to 4.25 V, and real-time X-ray diffraction pattern analysis is performed, and the resulting change in lattice constant is analyzed. Accordingly, the positive active material according to one embodiment has a very small variation in an X-ray diffraction peak, small variations in the a-axis lattice constant (a lattice parameter) and the c-axis lattice constant (c lattice parameter), and particularly the variation ratio of the c-axis lattice constant satisfies 2.5% or less. This is understood to be because the phase transition is suppressed due to lithium present in the transition metal layer, thereby reducing the change in the lattice constant. When the lattice constant variation ratio satisfies the range, strain and cracking of the positive active material during charge and discharge are suppressed, and the phenomenon of the positive active material breaking or falling off is reduced, so the lifespan characteristics of the lithium secondary battery are dramatically improved.

The positive active material can be expressed as a layered structure of a compound represented by Chemical Formula 1 whose c-axis lattice constant change is less than 2.5% as measured by real-time X-ray diffraction analysis during charge and discharge from 2.5 V to 4.25 V. Alternatively, a lithium secondary battery including the positive active material may be expressed as having a c-axis lattice constant change of less than 2.5% of the positive active material as measured by real-time X-ray diffraction analysis during charge and discharge in the range of 2.5 V to 4.25 V.

Additionally, the c-axis lattice constant can be measured with the R-3m structural model, or it can be measured with the C2/m structural model. Alternatively, it may be a value measured by a mixture model of the R-3m structure and the C2/m structure. Regardless of the structural model used for measurement, the variation ratio of the c-axis lattice constant according to charge and discharge can be satisfied within 2.5%.

The change in the c-axis lattice constant of the positive active material due to the charge and discharge can be, for example, less than 2.2%, less than 2.0%, less than 1.8%, less than 1.7%, less than 1.5% or less than 1.0%, and more than 0.1%, more than 0.2%, more than 0.3%, more than 0.4% or more than 0.5%. Positive active materials satisfying the range are structurally very stable and do not collapse or break even after repeated charge and discharge, so they can exhibit excellent lifespan characteristics and implement high capacity.

Here, the variation ratio (%) of the c-axis lattice constant of the positive active material according to charge and discharge can be derived through the calculation formula {(MAX-MIN)/MAX x 100}. In the calculation formula, MAX means the maximum value of the c-axis lattice during charge and discharge in the range of 2.5 V to 4.25 V, and MIN means the minimum value of the c-axis lattice.

Additionally, the positive active material can have a minimum value of the c-axis lattice constant during charge and discharge in the range of 2.5 V to 4.25 V of 99.5% or more based on the initial lattice constant, for example, 99.6% or more, 99.7% or more, 99.8% or more or 99.9% or more. In this case, the positive active material can maintain structural stability even after repeated charge and discharge, thereby exhibiting excellent lifespan characteristics.

The positive active material may also have a c-axis lattice constant of the R-3m structure that changes within the range of 13.90 Å to 14.46 Å during charge and discharge in the range of 2.5 V to 4.25 V, for example, within the range of 13.90 A to 14.40 Å, or 14.00 Å to 14.30 Å, or 14.13 Å to 14.22 Å, or 14.16 Å to 14.41 Å. When the c-axis lattice constant changes within this narrow range, the positive active material can implement structural stability even after repeated charge and discharge, and thus exhibit high lifespan characteristics.

Additionally, the positive active material can have a minimum value of the c-axis lattice constant during charge and discharge in the range of 2.5 V to 4.25 V of 99.5% or more based on the initial lattice constant, for example, 99.6% or more, 99.7% or more, 99.8% or more or 99.9% or more. In this case, the positive active material can maintain structural stability even after repeated charge and discharge, thereby exhibiting excellent lifespan characteristics.

The positive active material may also have a c-axis lattice constant of the R-3m structure that changes within the range of 13.90 Å to 14.46 Å during charge and discharge in the range of 2.5 V to 4.25 V, for example, within the range of 13.90 Å to 14.40 Å, or 14.00 Å to 14.30 Å, or 14.13 Å to 14.22 Å, or 14.16 Å to 14.41 Å. When the c-axis lattice constant changes within this narrow range, the positive active material can implement structural stability even after repeated charge and discharge, and thus exhibit high lifespan characteristics.

Here, the change in the c-axis lattice constant can mean not only the value at the initial charge and discharge, but also the value at repeated charges and discharges such as the second and third charges. That is, the positive active material according to one embodiment is structurally stable and can exhibit a very low change in c-axis lattice constant even after repeated charge and discharge.

According to one embodiment, the positive active material has a cation mixture, which means the content of nickel in the lithium site, of less than 5 atom%. In the case of high nickel-based positive active materials with a nickel content exceeding 80 mol%, there is a problem of capacity reduction due to excessive cation mixing phenomenon in which $Ni^{2+}$ ions occupy lithium sites. On the other hand, in the positive active material according to one embodiment, it was shown that excess lithium occupied some of the transition metal sites, the average oxidation number of the transition metal increased, and the cation mixing decreased accordingly. For example, it was confirmed that the average oxidation number of nickel is increased by lithium excess, the formation of the rock salt phase of Ni(II)-O bonds on the positive active material surface is suppressed, and the cation mixing is reduced, suppressing the elution of nickel. The cation mixing can be, for example, less than 4.5 atom%, less than 4.0 atom%, or less than 3.5 atom%. When the cation mixture satisfies the range, the positive active material can implement sufficient capacity and secure battery stability.

The positive active material has a very low content of impurities such as $Li_2CO_3$ and $Li_2O$ remaining in the active material because the lithium added in excess has been successfully incorporated into the active material structure. Specifically, the content of $Li_2CO_3$ present in the positive active material may be less than 0.5 wt%, for example less than 0.4 wt%. Additionally, the content of $Li_2O$ present in the positive active material may be less than 1.0 wt%, for example less than 0.8 wt% or less than 0.5 wt%. The contents of $Li_2CO_3$ and $Li_2O$ can be measured, for example, by X-ray diffraction analysis. When the content of impurities such as $Li_2CO_3$ and $Li_2O$ satisfies the range, it proves that a lithium-excess positive active material structure has been successfully synthesized, and a positive active material satisfying this can exhibit excellent battery characteristics such as high lifespan characteristics while implementing high capacity.

As an example, the positive active material may include a compound represented by Chemical Formula 2 below.

[Chemical Formula 2]　　　　　$Li_{1+a2} (Ni_{b2}Mn_{c2}M^2_{1-b2-c2})_{1-a2}O_2$

In the above formula 2, $0<a2<0.2$, $0.8<b2<1$, $0<c2<0.2$, $0\leq1-b2-c2<0.2$, $M^2$ is one or more elements selected from Co, Al, Mg, Ca, Ti, V, Cr, Zr, Nb, Mo, and W. A positive active material containing a compound represented by the formula 2 above can exhibit excellent battery characteristics such as high lifespan characteristics while implementing high capacity.

As another example, the positive active material may include a compound represented by Chemical Formula 3 below.

[Chemical Formula 3]　　　　　$Li1+a3 (Ni_{b3}Co_{c3}M^3_{1-b3-c3})_{1-a3}O_2$

In the above formula 3, $0<a3<0.2$, $0.8<b3<1$, $0<c3<0.2$, $0\leq1-b3-c3<0.2$, $M^3$ is one or more elements selected from Mn, Al, Mg, Ca, Ti, V, Cr, Zr, Nb, Mo, and W. A positive active material containing a compound represented by the formula 3 above can exhibit excellent battery characteristics such as high lifespan characteristics while implementing high capacity.

As another example, the positive active material may include a compound represented by the Chemical Formula 4 below.

[Chemical Formula 4]　　　　　$Li_{1+a4} (Ni_{b4}Co_{c4}Mn_{d4}M^4_{1-b4-c4-d4})_{1-a4}O_2$

In the above formula 4, $0<a4<0.2$, $0.8<b4<1$, $0<c4<0.1$, $0<d4<0.1$, $0\leq1-b3-c3-d4<0.1$, $M^4$ is one or more elements selected from Al, Mg, Ca, Ti, V, Cr, Zr, Nb, Mo, and W. A positive active material containing a compound represented by the formula 4 above can exhibit excellent battery characteristics such as high lifespan characteristics while implementing high capacity.

The average particle diameter of the positive active material can be about 2 μm to 25 μm, for example 5 μm to 25 μm, 10 μm to 25 μm, or 10 μm to 20 μm. When the average particle diameter of the positive active material satisfies the range, a positive active material with high tap density and high energy density per volume can be realized.

In one embodiment, a manufacturing method of the positive active material described above is provided.

More specifically, it is provided that a method of manufacturing a positive active material, comprising:

preparing a metal hydroxide precursor and a lithium raw material; and mixing and sintering the metal hydroxide precursor and the lithium raw material; wherein, a sintering temperature is t, a mole ratio of lithium in the lithium raw material to metal in the metal oxide precursor is l/m, the t is 780°C or less, an equation 1 below is satisfied.

$$[\text{equation 1}]$$

$$500 \leq t / (l/m) \leq 710$$

For example, $530 \leq t / (l/m) \leq 710$, or $600 \leq t / (l/m) \leq 710$.

When this range is satisfied, the appropriate mixing effect of metal and lithium in the above-mentioned cathode material can be obtained, thereby obtaining a positive active material with improved lifespan characteristics.

The manufacturing method includes a step of mixing a precursor containing a compound represented by Chemical Formula 5 below and a lithium raw material at a mole ratio of 1:1.06 to 1:1.3 and performing heat treatment at a temperature range of 650 °C to 780 °C.

[Chemical Formula 5]　　　　　$Ni_{b11}M^{11}_{1-b11} (OH)2$

In the above formula 11, $0.8<b11<1$, $M^{11}$ is one or more elements selected from Co, Mn, Al, Mg, Ca, Ti, V, Cr, Zr, Nb, Mo, and W.

According to this manufacturing method, a layer-type positive active material with a high nickel content exceeding 80 mol% and an excess amount of lithium incorporated into the structure can be successfully synthesized. Synthesis of positive active materials with a change in c-axis lattice constant of less than 2.5% due to charge and discharge is possible. The synthesized positive active material can exhibit excellent battery characteristics such as high capacity, high energy density, and high lifespan characteristics.

The compound represented by the formula 5 above is a transition metal hydroxide containing nickel and is a precursor of the positive active material. In the above formula 11, b11 represents the molar content of nickel with respect to the transition metal entire content, and may be, for example, $0.81 \leq b11 \leq 0.99$, $0.83 \leq b11 \leq 0.99$, $0.85 \leq b11 \leq 0.99$, $0.87 \leq b11 \leq 0.99$, $0.89 \leq b11 \leq 0.99$, $0.90 \leq b11 \leq 0.99$, $0.91 \leq b11 \leq 0.99$, $0.92 \leq b11 \leq 0.99$, or $0.81 \leq b11 \leq 0.98$.

In synthesizing lithium-excessive high nickel-based positive active materials, even a slight change in the amount of lithium added can affect the success or failure of the synthesis, and there is a characteristic that the electrochemical characteristics of the synthesized active material change significantly. In one embodiment, a lithium-rich high nickel-based positive active material that implements high capacity while maintaining a stable structure was successfully synthesized by mixing a transition metal hydroxide precursor and a lithium raw material at a mole ratio of 1:1.06 to 1:1.3 and performing heat treatment in a temperature range of 680 °C to 780 °C. The mixing ratio of the transition metal hydroxide precursor and the lithium raw material can be, for example, a mole ratio of 1:1.06 to 1:1.25, or 1:1.06 to 1:1.2. Additionally, the heat treatment temperature can be, for example, 680 °C to 750 °C, 680 °C to 740 °C, 680 °C to 730 °C, 680 °C to 710 °C, 680 °C to 700 °C, or 690 °C to 780 °C, or 700 °C to 750 °C. When the mixing ratio of the transition metal hydroxide precursor and the lithium raw material satisfies the range, and when the heat treatment temperature satisfies the range, the desired lithium-excess high nickel-based positive active material can be successfully synthesized. That is, a lithium-rich positive active material can be successfully synthesized as a material having a nickel content exceeding 80 mol% and a lithium molar content within the structure satisfying 1.02 to 1.15. The synthesized positive active material can exhibit excellent battery characteristics such as high capacity, high energy density, and high lifespan characteristics.

The transition metal hydroxide, i.e. the precursor of the positive active material, can be prepared by a general co-precipitation method. For example, the precursor can be manufactured by introducing a metal salt an aqueous solution containing a nickel raw material such as a nickel salt, an aqueous solution such as ammonia as a chelating agent, and an alkali an aqueous solution such as NaOH for pH adjustment into a co-precipitation reactor, and injecting $N_2$ to prevent oxidation of the metal ion while causing a co-precipitation reaction.

The nickel salt can be nickel sulfate, nickel nitrate, nickel chloride, nickel fluoride or a combination thereof. The metal salts in an aqueous solution may contain, in addition to nickel salts, cobalt salts, manganese salts, aluminum salts, etc. The cobalt salt may be, for example, cobalt sulfate, cobalt nitrate, cobalt chloride, cobalt fluoride, or a combination thereof. The manganese salt may be, for example, manganese sulfate, manganese nitrate, manganese chloride, manganese fluoride, or a combination thereof, and the aluminum salt may be, for example, aluminum sulfate, aluminum nitrate, aluminum chloride, aluminum fluoride, or a combination thereof.

The lithium source may include, for example, $Li_2CO_3$, LiOH, or a combination thereof.

Another embodiment provides a lithium secondary battery comprising a positive electrode including the positive active material described above; a negative electrode; and a non-aqueous electrolyte.

The positive electrode includes a current collector and a positive electrode active material layer including a positive electrode active material formed on the current collector. The positive electrode active material includes a positive electrode active material according to an embodiment. In the positive electrode, the content of the positive electrode active material may be 90 wt% to 99 wt% with respect to the entire weight of the positive electrode active material layer.

In one embodiment, the positive electrode active material layer may further include a binder and a conductive material. In this case, the content of the binder and the conductive material may be 1 wt% to 5 wt%, respectively, with respect to the entire weight of the positive electrode active material layer.

The binder serves to attach the positive electrode active material particles well to each other and to attach the positive electrode active material to the current collector well. Representative examples of the binder include polyvinyl alcohol, carboxymethylcellulose, hydroxypropylcellulose, diacetylcellulose, polyvinylchloride, carboxylated polyvinylchloride, polyvinylfluoride, polymers containing ethylene oxide, polyvinylpyrrolydone, polyurethane, polytetrafluoroethylene, polyvinylidene fluoride, polyethylene, polypropylene, styrene-butadiene rubber, acrylated styrene-butadiene rubber, epoxy resin, nylon, etc. may be used, but are not limited thereto.

The conductive material is used to impart conductivity to the electrode, and any electronic conductive material can be used without causing chemical change in the battery to be configured. Examples of the conductive material include carbon-based materials such as natural graphite, artificial graphite, carbon black, acetylene black, ketchen black, and carbon fiber; metal-based materials such as metal powder or metal fibers such as copper, nickel, aluminum, and silver; conductive polymers such as polyphenylene derivatives; or a conductive material containing a mixture thereof.

As the current collector, aluminum foil, nickel foil, or a combination thereof may be used, but is not limited thereto.

The negative electrode may include a current collector and a negative active material layer formed on the current collector and including the negative active material according to an embodiment.

The negative active material includes a material capable of intercalating/deintercalating lithium ions reversibly, lithium metal, an alloy of lithium metal, a material capable of doping and undoping lithium, or a transition metal oxide.

A material that can intercalate/deintercalate the lithium ion reversibly is a carbon material, any generally-used carbon-based negative active material can be used in a lithium ion secondary battery, and typical examples thereof include crystalline carbon, amorphous carbon or combination thereof.

The alloy of the lithium metal is from the group consisting of lithium and Na, K, Rb, Cs, Fr, Be, Mg, Ca, Sr, Si, Sb, Pb, In, Zn, Ba, Ra, Ge, Al and Sn. Any alloy of selected metals may be used.

Materials capable of doping and undoping the lithium include Si, SiOx (0 < x < 2), Si-Y alloy (the Y is an element selected from the group consisting of an alkali metal, an alkaline earth metal, a group 13 element, a group 14 element, a transition metal, and a rare earth element and its combination thereof, but not Si), Sn, $SnO_2$, Sn-Y (the Y is an element selected from the group consisting of an alkali metal, an alkaline earth metal, a group 13 element, a group 14 element, a transition metal, a rare earth element and the combination thereof, not Sn), and the like.

Examples of the transition metal oxide include vanadium oxide and lithium vanadium oxide. The negative active material layer also includes a binder and may optionally further include a conductive material.

The binder serves to adhere the negative active material particles to each other well and to adhere the negative active material to the current collector well.

The conductive material is used to impart conductivity to the electrode, and any electronic conductive material can be used without causing chemical change in the battery.

As the current collector, one selected from the group consisting of copper foil, nickel foil, stainless steel foil, titanium foil, nickel foam, copper foam, a conductive metal-coated polymer substrate, and a combination thereof may be used.

The negative electrode is formed by mixing a negative active material, a binder and optionally a conductive material in a solvent to prepare an active material composition, and applying the active material composition to a current collector. Since such a negative electrode formation method is widely known in the art, a detailed description will be omitted in this specification. N-methylpyrrolidone, etc. can be used as a solvent, but is not limited thereto.

The electrolyte includes a non-aqueous organic solvent and a lithium salt.

The non-aqueous organic solvent serves as a medium through which ions involved in the electrochemical reaction of the battery can move.

The lithium salt is a material that dissolves in an organic solvent and acts as a supply source of lithium ion in the battery to enable basic operation of the lithium secondary battery and promotes the movement of lithium ion between the positive electrode and the negative electrode.

Depending on the type of lithium secondary battery, a separator may exist between the positive electrode and the negative electrode. As such a separator, polyethylene, polypropylene, polyvinylidene fluoride or a multilayer of two or more of these may be used, and polyethylene/polypropylene 2-layer separator, polyethylene/polypropylene/polyethylene 3-layer separator, polypropylene/polyethylene/polypropylene 3-layer separator can be used.

Lithium secondary batteries can be classified into lithium ion batteries, lithium ion polymer batteries and lithium polymer batteries according to the type of separator and electrolyte used. Depending on the shape, it can be classified into cylindrical, prismatic, coin-type, pouch-type, etc., and can be divided into bulk type and thin film type according to size. Since the structures and manufacturing methods of these batteries are well known in this field, detailed descriptions are omitted.

The following examples illustrate the present invention in more detail. However, the exemplary embodiment below is only an exemplary embodiment, and the present invention is not limited to the exemplary embodiment below.

## Exemplary embodiment

### (1) Preparation of positive active material precursor

A precursor having a composition of $Ni_{0.92}Co_{0.04}Mn_{0.04}(OH)_2$ is prepared by a general co-precipitation method. Specifically, $NiSO_4 \cdot 6H_2O$, $CoSO_4 \cdot 7H_2O$, and $MnSO_4 \cdot H_2O$ are dissolved in distilled water to prepare an aqueous solution of metal salts. After preparing the co-precipitation reactor, $N_2$ is injected to prevent oxidation of metal ions during the co-precipitation reaction, and the reactor temperature is maintained at 50°C. $NH_4(OH)$ is added as a chelating agent to the co-precipitation reactor, and NaOH is added to adjust the pH. The precipitate obtained through the co-precipitation process is filtered, washed with distilled water, and dried in a 100°C oven for 24 hours to produce a positive active material precursor with an average diameter of approximately 14.8 $\mu$m.

### (2) Manufacturing of positive active material

The manufactured precursor and $LiOH \cdot H_2O$ are mixed at various mole ratios, placed in a tube furnace, and sintered while inflowing oxygen at 50 mL/min. After sintering under the conditions in the table below, the product is then naturally cooled to 25°C.

(3) Battery (Cell) manufacturing

92% of the manufactured positive active material, 4% of Super P as a conductive material, and 4% of PVDF as a binder are added to the NMP solution, mixed to manufacture a slurry, and then applied onto an aluminum current collector to manufacture a positive electrode, and a coin half-cell is manufactured using lithium metal as a negative electrode.

(Table 1)

|  | Mole ratio of lithium raw material to precursor | sintering temperature (°C) |
|---|---|---|
| exemplary embodiment | 1.03 | 700 |
| exemplary embodiment | 1.06 | 700 |
| exemplary embodiment | 1.10 | 700 |
| exemplary embodiment | 1.16 | 700 |
| exemplary embodiment | 1.20 | 700 |
| exemplary embodiment | 1.30 | 700 |
| exemplary embodiment | 1.03 | 750 |
| exemplary embodiment | 1.06 | 750 |
| exemplary embodiment | 1.10 | 750 |
| exemplary embodiment | 1.16 | 750 |
| exemplary embodiment | 1.20 | 750 |
| exemplary embodiment | 1.30 | 750 |
| Comparative Example | 1.03 | 800 |
| Comparative Example | 1.06 | 800 |
| Comparative Example | 1.10 | 800 |
| Comparative Example | 1.16 | 800 |
| Comparative Example | 1.20 | 800 |
| Comparative Example | 1.30 | 800 |

**Evaluation example: X-ray diffraction pattern analysis**

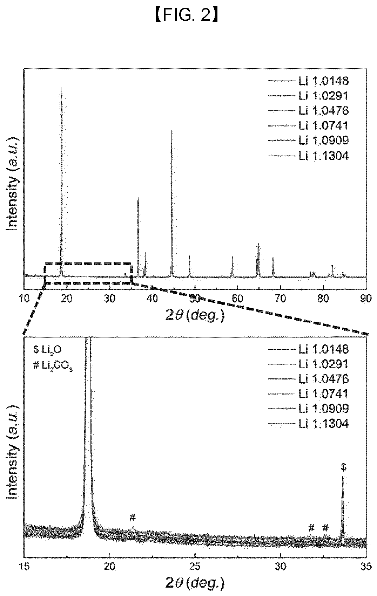

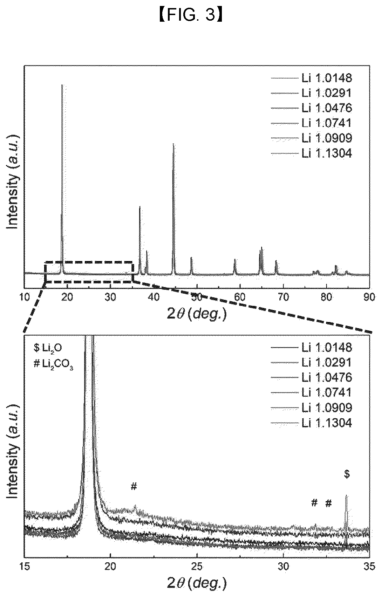

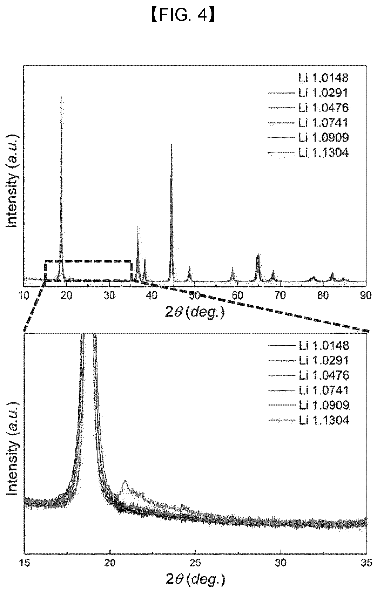

X-ray diffraction analysis was performed on the positive active material manufactured in the exemplary embodiment and comparative example, and the results are shown in FIG. 2 to FIG. 4. FIG. 2 is the X-ray diffraction pattern of the active material of the Comparative Example. FIG. 3 is an X-ray diffraction pattern of the active material of an exemplary embodiment. FIG. 4 is an X-ray diffraction pattern of the active material of an exemplary embodiment.

In the X-ray diffraction patterns of FIG. 2 to FIG. 4, the broad peak around 21 degrees from the horizontal axis corresponds to the peak due to the C2/m phase, and in the case of the exemplary embodiment, it can be confirmed that as the lithium content increases, the phase corresponding to the C2/m space group is gradually formed, and accordingly, it can be indirectly confirmed that excess lithium has penetrated into the active material. On the other hand, in the Comparative Example, it can be seen that even if the lithium content increases, lithium is not incorporated into the active material structure.

**Evaluation example: Analysis of residual impurity content**

The contents of residual impurities, $Li_2CO_3$ and $Li_2O$, were measured by Rietveld analysis using X-ray diffraction analysis on the positive active materials manufactured in the exemplary embodiment and comparative example.

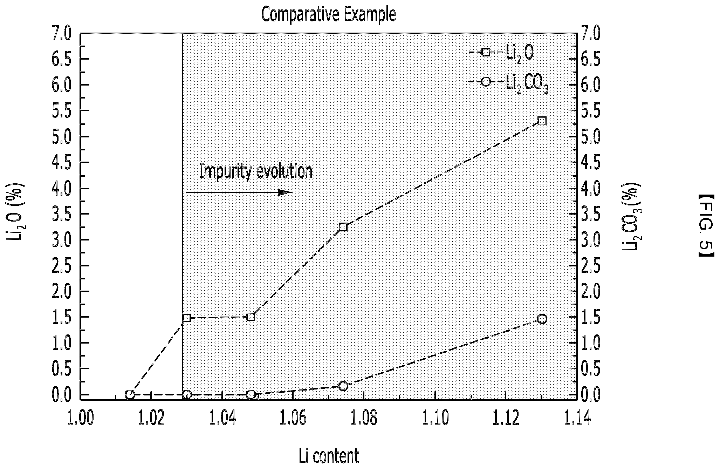

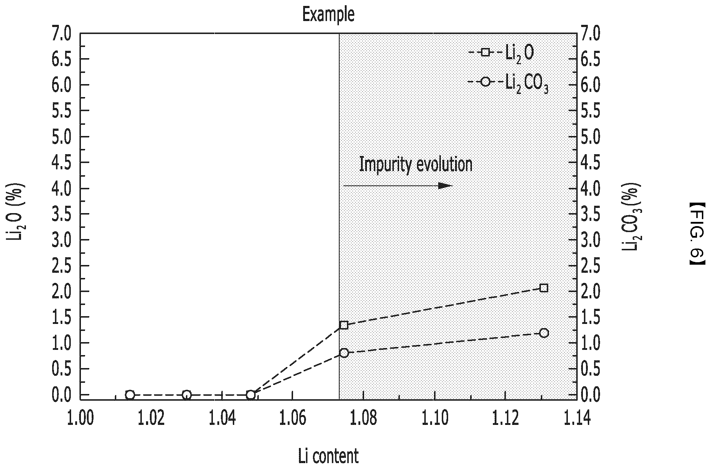

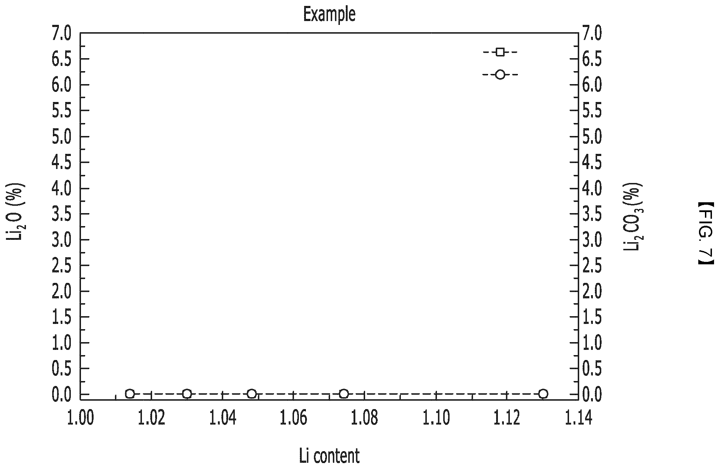

The impurity content for the positive active material of the comparative example is shown in FIG. 5, the impurity content for the positive active material of the exemplary embodiment is shown in FIG. 6, and the impurity content for the positive active material of the exemplary embodiment is shown in FIG. 7.

In the case of the Comparative Example in FIG. 5, it can be confirmed that the excess lithium cannot enter the active material structure and remains in the form of impurities such as $Li_2CO_3$ and $Li_2O$. On the other hand, in the case of the exemplary embodiment in FIG. 6, the impurity content was greatly reduced, and in the case of the exemplary embodiment in FIG. 7, the impurity was almost non-existent, confirming that excess lithium had penetrated into the active material structure.

### Evaluation example: Nickel oxidation number analysis

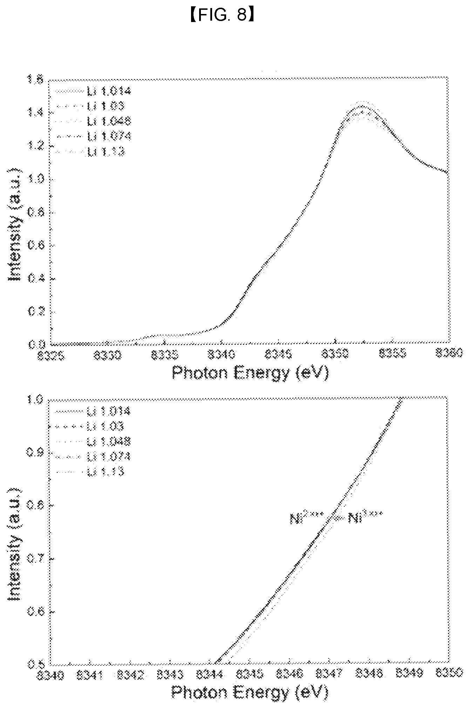

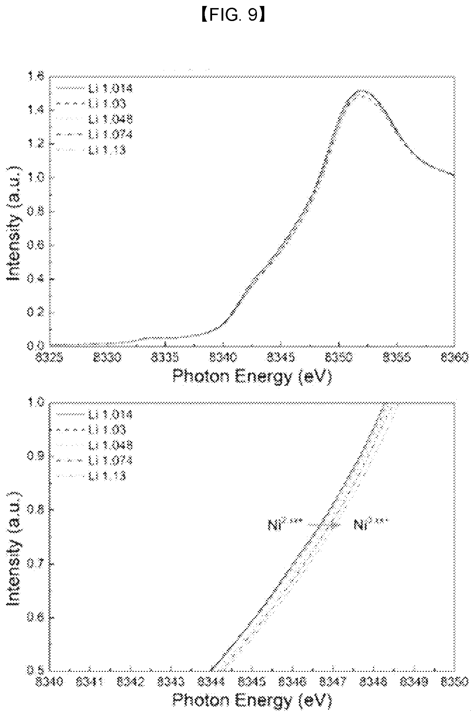

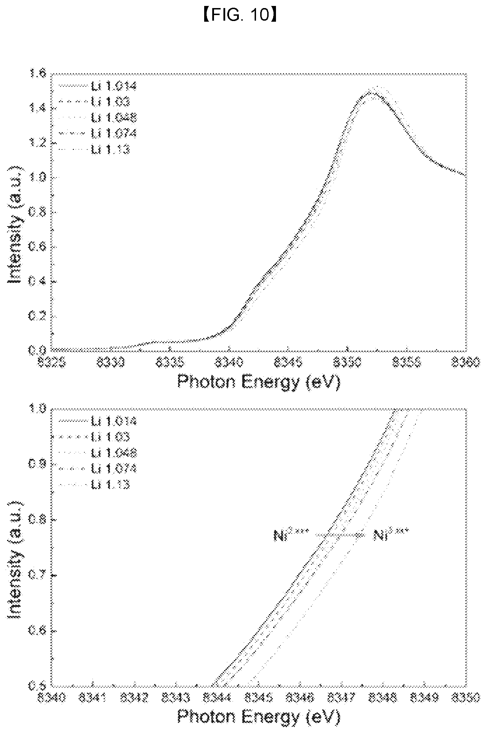

Through X-ray Absorption Near-Edge Structure (XANES) analysis of the positive active materials manufactured in exemplary embodiments 1 to 12 and Comparative Examples 1 to 6, the oxidation number of nickel was analyzed, and the change in the oxidation number of nickel for the positive active material of the comparative example is shown in FIG. 8, and the change in the oxidation number of nickel for the positive active material of the exemplary embodiment is shown in FIGs. 9 and 10.

In general, when lithium penetrates into the active material structure and a lithium excess structure is formed, lithium occupies the transition metal site, and the oxidation number of the remaining transition metal increases. Referring to FIG. 8 to 10, in the case of the Comparative Example, there is little change in the oxidation number of nickel as the lithium content increases, but in the case of the exemplary embodiment, it can be confirmed that the oxidation number of nickel clearly increases as the lithium content increases, and accordingly, it can be confirmed that the excess lithium was successfully incorporated into the active material structure, and the synthesis of the intended positive active material was smoothly achieved.

### Evaluation example: Analysis of lithium content in positive active material structure using neutron diffraction analysis

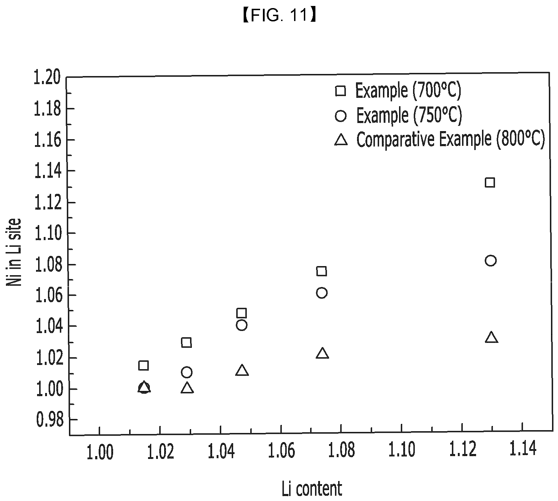

Neutron diffraction analysis was performed on the positive active material manufactured in the exemplary embodiment and comparative example using the HANARO atom reactor at the Korea Atomic Energy Research Institute, and Rietveld analysis (Rietveld refinement) was performed using the analysis results. Through this, a lithium content within the positive active material structure was analyzed, and the results are shown in FIG. 11.

Referring to FIG. 11, in the exemplary embodiment, it can be confirmed that the molar content of lithium in the active material structure is in the range of 1.01 to 1.15 per 1 mole of the active material, and it can be confirmed once again that lithium is incorporated into the active material structure more easily than in the comparative example.

Table 2 below shows the results of analyzing the lithium molar concentration within the transition metal layer and the transition metal molar concentration within the lithium layer.

It can be confirmed that the result of improved lifespan characteristics can be obtained when the substitution amount of lithium in the first metal layer is 1.5 mol% or more.

In addition, it can be confirmed that the lifespan characteristic is secured when the substitution amount of lithium in the first metal layer is greater than the substitution amount of metal in the first lithium layer, and the difference between them is 1 mol% or more.

(Table 2)

| division | Sintering temperature | (input) lithium mole ratio (Li/T™) | Lithium mole ratio / temperature for transition metals | (input) lithium content $Li_xTM_{2-x}O_2$ | Lithium molar content in the structure | Lithium mole concentration o of the transition metal layer (a) | Transition metal mole concentration of lithium layer (b) | (a)-(b) | nickel in lithium layer) / ((transition metal of lithium layer) | nickel in the transition metal layer) / (transition metal of transition metal layer) | c-axis lattice constant variation ratio at first charge and discharge | c-axis lattice constant variation ratio at second charge and discharge | 2.5 - 4.9V charge capacity | 2.5 - 4.5 V 80 times retention |
|---|---|---|---|---|---|---|---|---|---|---|---|---|---|---|
| exemplary embodiment | 700 | 1.03 | 679.6 | 1.0147 | 1.015 | 0.062 | 0.047 | 0.015 | -1 | 0.316 | 2.490 | 2.382 | 274.05 | 0.8244 |
| exemplary embodiment | 700 | 1.06 | 660.4 | 1.0291 | 1.029 | 0.070 | 0.041 | 0.029 | -1 | 0.916 | | | 276.91 | - |
| exemplary embodiment | 700 | 1.10 | 636.4 | 1.0476 | 1.048 | 0.084 | 0.036 | 0.048 | -1 | 0.917 | | | 285.40 | - |
| exemplary embodiment | 700 | 1.16 | 603.4 | 1.0741 | 1.074 | 0.107 | 0.033 | 0.074 | -1 | 0.917 | | | 292.10 | 0.9298 |
| exemplary embodiment | 700 | 1.30 | 538.5 | 1.1304 | 1.130 | 0.146 | 0.016 | 0.130 | -1 | 0.919 | 0.938 | 0.598 | 324.82 | 0.9698 |
| Comparative Example | 750 | 1.03 | 728.2 | 1.0147 | 1.000 | 0.010 | 0.010 | 0.000 | -1 | 0.919 | 3.498 | 3.605 | 265.90 | 0.7980 |
| exemplary embodiment | 750 | 1.06 | 707.5 | 1.0291 | 1.010 | 0.015 | 0.005 | 0.010 | -1 | 0.920 | | | 265.10 | 0.8130 |
| exemplary embodiment | 750 | 1.16 | 646.6 | 1.0741 | 1.060 | 0.064 | 0.004 | 0.060 | -1 | 0.920 | | | 270.77 | 0.8642 |
| exemplary embodiment | 750 | 1.30 | 576.9 | 1.1304 | 1.080 | 0.083 | 0.003 | 0.080 | -1 | 0.920 | 1.680 | 1.698 | 259.73 | 0.9658 |
| Comparative Example | 800 | 1.03 | 776.7 | 1.0147 | 1 | 0.004 | 0.004 | 0.000 | -1 | 0.920 | 3.768 | 3.896 | 268.34 | 0.7012 |
| Comparative Example | 800 | 1.06 | 754.7 | 1.0291 | 1 | 0.004 | 0.004 | 0.000 | -1 | 0.920 | | | 265.56 | 0.7552 |
| Comparative Example | 800 | 1.10 | 727.3 | 1.0476 | 1.01 | 0.013 | 0.003 | 0.010 | -1 | 0.920 | | | 272.21 | 0.7105 |

(continued)

| division | Sintering temperature | (input) lithium mole ratio $(Li/T^{TM})$ | Lithium mole ratio / temperature for transition metals | (input) lithium content $Li_xTM_{2-x}O_2$ | Lithium molar content in the structure | Lithium mole concentration o of the transition metal layer (a) | Transition metal mole concentration of lithium layer (b) | (a)-(b) | nickel in lithium layer) / ((transition metal of lithium layer) | nickel in the transition metal layer) / (transition metal of transition metal layer) | c-axis lattice constant variation ratio at first charge and discharge | c-axis lattice constant variation ratio at second charge and discharge | 2.5 - 4.9V charge capacity | 2.5 - 4.5 V 80 times retention |
|---|---|---|---|---|---|---|---|---|---|---|---|---|---|---|
| exemplary embodiment | 760 | 1.10 | 690.9 | 1.0476 | | | | | | | | | 260.67 | 0.810 |
| exemplary embodiment | 740 | 1.10 | 672.7 | 1.0476 | | | | | | | | | 269.87 | 0.803 |
| exemplary embodiment | 700 | 1.10 | 636.4 | 1.0476 | | | | | | | | | 288 | 0.940 |

**Evaluation Example 3: PDF (Pair Distribution Function) analysis of Fourier transformed neutron diffraction analysis result**

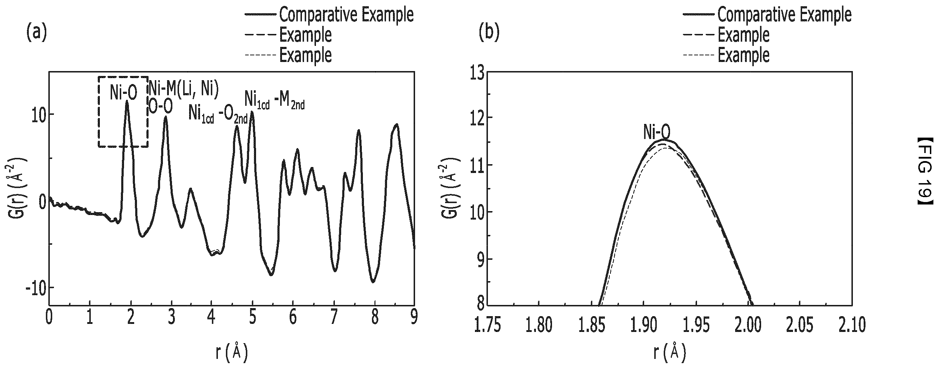

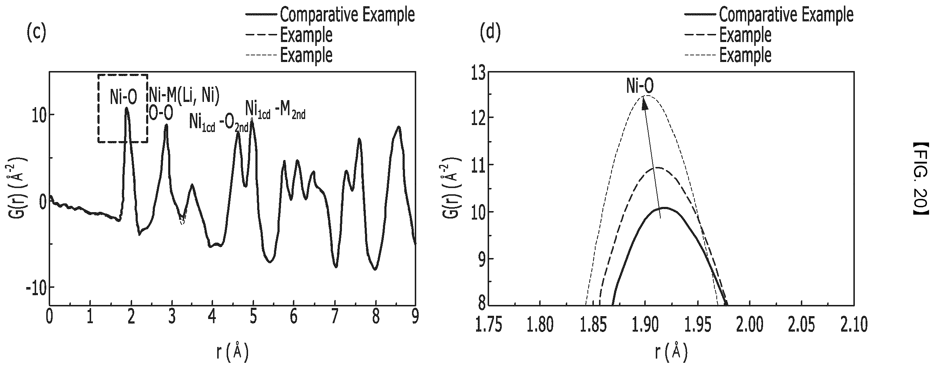

To understand the changes in the local structure of the M-O bond due to lithium-excess transition metal substitution, the pair distribution function (PDF) analysis, which is a Fourier transform of the neutron diffraction analysis result, was performed. FIG. 19 is the PDF analysis result for the positive active material manufactured in Comparative Example. FIG. 20 is the PDF analysis result for the positive active material manufactured in the Comparative Example and exemplary embodiment.

Comparing FIG. 19 and FIG. 20, there is no significant difference in the Ni-O bond distance in the comparative example synthesized at 800°C. This means that the lithium/transition metal ratio within the crystal structure remains almost constant regardless of the lithium/transition metal ratio input during synthesis. On the other hand, in the case of the exemplary embodiment synthesized at 700°C, the Ni-O bond distance decreases as the lithium excess increases. This phenomenon occurs because the ratio of lithium in the structure increases and the ratio of transition metal decreases at low synthesis temperatures. This increases the oxidation number of Ni, which increases the Ni-O bond strength and reduces the Ni-O bond distance. This means that at 700°C, excess lithium is incorporated into the structure.

Tables 3 and 4 below are data that evaluate battery characteristics according to the length of M-O by manufacturing more diverse positive materials.

It can be confirmed that the exemplary embodiment with reduced M-O length secures excellent lifespan characteristics.

(Table 3)

| precursor | Ni | Co | Al | Mn |
|---|---|---|---|---|
| N86 | 86.5 | 5.5 | 1.0 | 7.0 |
| N88 | 88.0 | 9.5 | 0.0 | 2.5 |
| N93 | 94.0 | 5.0 | 1.0 | 1.0 |
| N95 | 95.0 | 3.0 | 0.0 | 2.0 |
| N97 | 97.0 | 2.0 | 0.0 | 1.0 |

(Table 4)

| Division | precursor | Sintering temperature | (input) lithium mole ratio[Li/TM] | (input) lithium content [$Li_xTM_{2-x}O_2$] | 2.5 - 4.9V charge capacity | 2.5 - 4.5 V 80 times retention | M-O average bond length (Å) |
|---|---|---|---|---|---|---|---|
| Comparative Example | N86 | 760 | 1.03 | 1.0147 | 260.4 | 0.789 | 1.926 |
| exemplary embodiment | N86 | 760 | 1.1 | 1.0476 | 260.67 | 0.81 | 1.919 |
| Comparative Example | N88 | 750 | 1.03 | 1.0147 | - | - | 1.922 |
| Comparative Example | N93 | 750 | 1.03 | 1.0147 | 266.62 | - | 1.929 |
| exemplary embodiment | N93 | 750 | 1.1 | 1.0476 | 266.37 | - | 1.919 |
| Comparative Example | N95 | 730 | 1.03 | 1.0147 | 267.17 | - | 1.923 |
| exemplary embodiment | N95 | 730 | 1.1 | 1.0476 | - | - | 1.918 |
| Comparative Example | N97 | 740 | 1.05 | 1.0244 | 270.1 | 0.765 | 1.922 |
| exemplary embodiment | N97 | 740 | 1.1 | 1.0476 | 269.87 | 0.803 | 1.918 |

(continued)

| Division | precursor | Sintering temperature | (input) lithium mole ratio[Li/TM] | (input) lithium content [$Li_xTM_{2-x}O_2$] | 2.5 - 4.9V charge capacity | 2.5 - 4.5 V 80 times retention | M-O average bond length (Å) |
|---|---|---|---|---|---|---|---|
| exemplary embodiment | N97 | 700 | 1.1 | 1.0476 | 288 | 0.94 | 1.913 |

## Evaluation example: cation mixed analysis

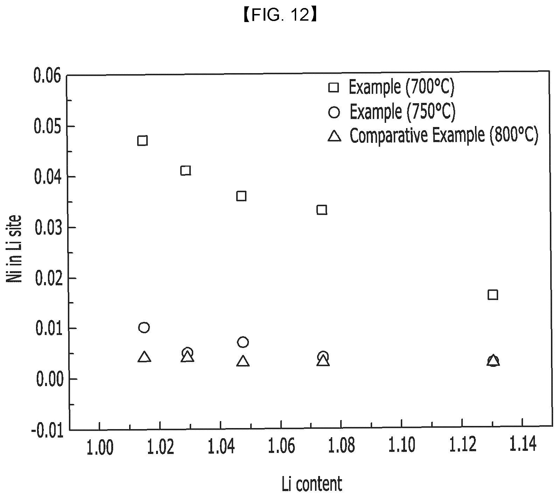

The ratio of nickel in the lithium site, i.e., cation mixing, was analyzed through Rietveld analysis using neutron diffraction analysis for the positive active material manufactured in the exemplary embodiment and comparative example, and the results are shown in FIG. 12. Looking at the graph of the exemplary embodiment in FIG. 12, it can be seen that as the lithium content increases and the excess lithium entering the active material structure increases, the oxidation number of the transition metal increases and the cation mixing decreases accordingly. Additionally, it can be confirmed that the cation ion mixing of the positive active material of the exemplary embodiment is less than 5 atom%. The fact that the exemplary embodiment has more cation ion mixing than the comparative example is because the synthesis temperature of the exemplary embodiment is relatively lower than that of the comparative examples, which results in more cation ion mixing.

## Evaluation example: Real-time X-ray diffraction analysis during charge and discharge

For the battery manufactured in the exemplary embodiment and comparative example with a mole ratio of lithium raw material to precursor of 1.30, charge and discharge are performed in the range of 2.5 V to 4.25 V, and real-time X-ray diffraction analysis and the resulting lattice constant change of the R-3m structural model are analyzed. X-ray diffraction analysis (XRD) was performed with an X-ray diffraction meter (Empyrean, Malvern Panalytical) equipped with CuKα radiation ($\lambda$ = 1.540598 Å).

For the exemplary embodiment, we can see that the change in the lattice constant is smaller than in the comparative example. Through this, it can be seen that the active material manufactured in the exemplary embodiment suppresses structural collapse or cracks due to charge and discharge, and accordingly, it is understood that the lifespan characteristics of the battery are improved.

For the batteries manufactured in the exemplary embodiment and comparative example, second charge and discharge were performed in the range of 2.5 V to 4.25 V, and the lattice constant change was confirmed by real-time X-ray diffraction analysis.

For the exemplary embodiment, it can be confirmed that the change in the lattice constant is smaller than that of the comparative example. Through this, we can see that the change in lattice constant is not a characteristic of the first cycle alone, but a reversible characteristic.

The changes in the c-axis lattice constant are specifically shown in Table 5 and Table 6 below.

(Table 5)

| **first** charge and discharge | Lithium mole ratio, sintering temperature for precursor | c-axis lattice constant (A) | | | | | c-axis lattice constant variation (Max-Min) (Å) | c-axis lattice constant variation ratio% ((Max-Min)/Max *100) |
|---|---|---|---|---|---|---|---|---|
| | | Before 2.5 V charge | At 4.25 V charge | After 2.5 V discharge | Maximum value during charge and discharge | Minimum value during charge and discharge | | |
| exemplary embodiment | 1.30, 700°C | 14.083 | 14.181 | 14.142 | 14.216 | 14.083 | 0.133 | **0.938** |
| exemplary embodiment | 1.30,750°C | 14.168 | 14.177 | 14.220 | 14.410 | 14.168 | 0.242 | **1.680** |
| Comparative Example | 1.30,800°C | 14.148 | 14.075 | 14.200 | 14.413 | 14.075 | 0.338 | **2.345** |

(continued)

| first charge and discharge | Lithium mole ratio, sintering temperature for precursor | c-axis lattice constant (A) | | | | | c-axis lattice constant variation (Max-Min) (Å) | c-axis lattice constant variation ratio% ((Max-Min)/Max *100) |
|---|---|---|---|---|---|---|---|---|
| | | Before 2.5 V charge | At 4.25 V charge | After 2.5 V discharge | Maximum value during charge and discharge | Minimum value during charge and discharge | | |
| Comparative Example | 1.03,700°C | 14.161 | 13.941 | 14.193 | 14.300 | 13.941 | 0.359 | **2.507** |
| Comparative Example | 1.03,750°C | 14.178 | 13.929 | 14.231 | 14.434 | 13.929 | 0.505 | **3.498** |
| Comparative Example | 1.03,800°C | 14.178 | 13.915 | 14.223 | 14.460 | 13.915 | 0.545 | **3.768** |

(Table 6)

| second charge and discharge | Lithium mole ratio, sintering temperature for precursor | c-axis lattice constant (A) | | | | | c-axis lattice constant variation (Max-Min) (Å) | c-axis lattice constant variation ratio% ((Max-Min)/Max *100) |
|---|---|---|---|---|---|---|---|---|
| | | Before 2.5 V charge | At 4.25 V charge | After 2.5 V discharge | Maximum value during charge and discharge | Minimum value during charge and discharge | | |
| exemplary embodiment | 1.30, 700°C | **14.140** | **14.179** | **14.131** | **14.216** | **14.131** | **0.085** | **0.598** |
| exemplary embodiment | 1.30,750°C | **14.224** | **14.163** | **14.240** | **14.408** | **14.163** | **0.245** | **1.698** |
| Comparative Example | 1.30,800°C | **14.205** | **14.027** | **14.193** | **14.412** | **14.027** | **0.385** | **2.671** |
| Comparative Example | 1.03,700°C | **14.195** | **13.935** | **14.194** | **14.302** | **13.935** | **0.367** | **2.563** |
| Comparative Example | 1.03,750°C | **14.232** | **13.916** | **14.223** | **14.436** | **13.916** | **0.520** | **3.605** |
| Comparative Example | 1.03,800°C | **14.220** | **13.897** | **14.221** | **14.460** | **13.897** | **0.563** | **3.896** |

Referring to the table, it can be confirmed that for exemplary embodiments, the variation ratio of the c-axis lattice constant of the R-3m structure is less than 2.5% at the initial and second charge and discharge in the range of 2.5 V to 4.25 V, the maximum value of the c-axis lattice constant is less than 14.41 Å, and the change value of the c-axis lattice constant is less than 0.35 Å. Accordingly, the positive active material of exemplary embodiments is understood to be structurally very stable and exhibits high lifespan characteristics without collapse even after repeated charging and discharging.

In addition, it can be seen that the change in lattice constant is a characteristic controlled not only by the sintering temperature but also by the amount of lithium added.

## Evaluation example: Electrochemical characteristics of a battery at high voltage

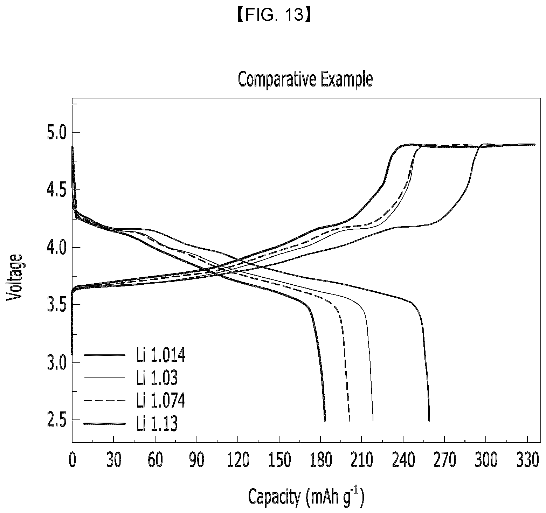

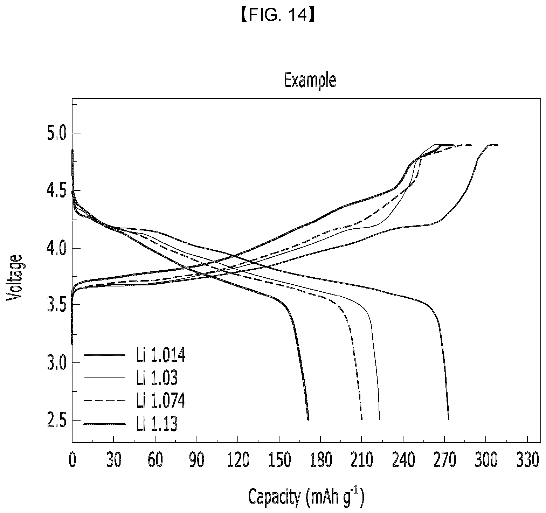

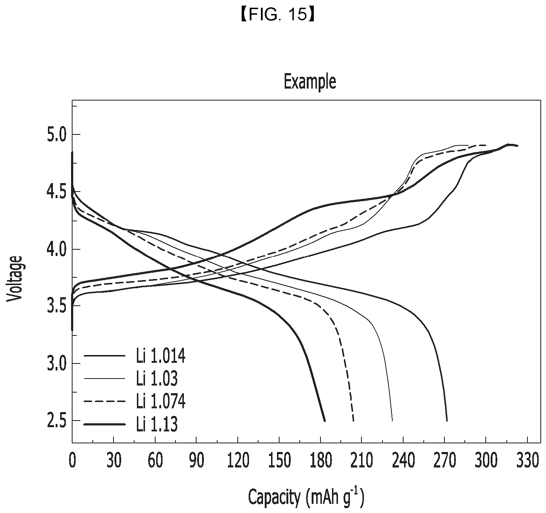

For the half-cells manufactured in the exemplary embodiment and the Comparative Example, a charge was performed with a cut-off at 4.9 V, and the electrochemical characteristics of the battery of the Comparative Example are shown in FIG. 13, the electrochemical characteristics of the battery of the exemplary embodiment are shown in FIG. 14, and the electrochemical characteristics of the battery of the exemplary embodiment are shown in FIG. 15.

In general, lithium-excessive materials, that is, active materials with excess lithium within the active material structure, are known to exhibit oxygen oxidation/reduction reactions at high voltages. In the case of the battery of the exemplary embodiment shown in FIG. 14 and FIG. 15, it can be confirmed that an irreversible reaction occurred in the 4.6 V at the first charge, and this reaction is generally known as an oxidation/reduction reaction of oxygen. Therefore, in the exemplary embodiment, it can be confirmed once again that the desired lithium-excess positive active material was smoothly synthesized.

**Evaluation example: Evaluation of battery lifespan characteristics**

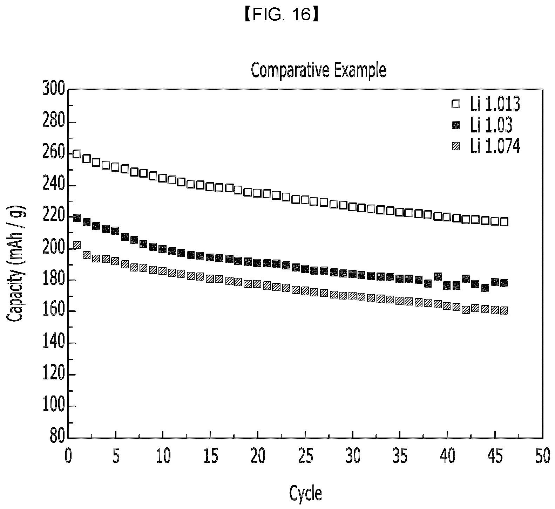

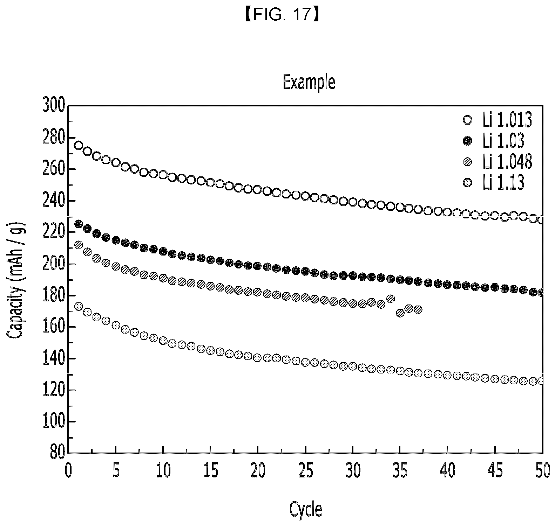

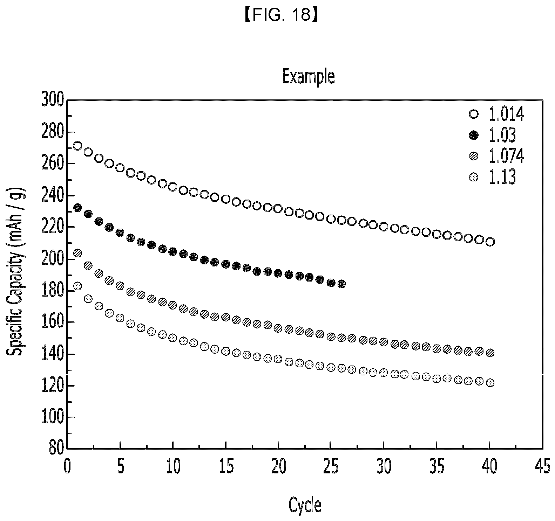

The lifespan characteristics of the batteries manufactured in the exemplary embodiment and comparative example were evaluated by performing charge and discharge cycles up to approximately 50 times.
The lifespan characteristic for the battery of the comparative example is shown in FIG. 16, and the lifespan characteristic for the battery of the exemplary embodiment is shown in FIG. 17 and 18.
Referring to FIG. 16 and FIG. 18, it can be confirmed that the batteries of exemplary embodiments implement high-capacity and high lifespan characteristics.
Although the above preferably exemplary embodiments have been described in detail, the scope of the rights of the present invention is not limited thereto, and various modifications and improvements of a person of an ordinary skill in the art using the basic concept defined in the following claims also fall within the scope of the rights of the present invention.

**Claims**

1. A positive active material is:

    a layered metal oxide crystal structure including a lithium layer and a metal layer,
    wherein, the crystal structure includes a first metal layer in which some of the metal is replaced by lithium,
    the crystal structure includes a first lithium layer in which some of the lithium in the lithium layer is replaced by metal,
    a substitution amount of lithium in the first metal layer is 1.5 mol% or more, and
    a nickel content is 80 mol% or more, with 100 mol% of metal in the positive active material as the reference.

2. The positive active material of claim 1, wherein:
    a substitution amount of lithium in the first metal layer is 1.5 mol% or more and 15 mol% or less.

3. The positive active material of claim 1, wherein:
    a substitution amount of metal in the first lithium layer is 0.5 mol% or more and 5 mol% or less.

4. The positive active material of claim 1, wherein:
    a substitution amount of lithium in the first metal layer is greater than the amount of metal substitution in the first lithium layer.

5. The positive active material of claim 4, wherein:
    a difference between the substitution amount of lithium in the first metal layer and the substitution amount of metal in the first lithium layer is 1 mol% or more and 15 mol% or less.

6. The positive active material of claim 1, wherein:
    a mole ratio of lithium to the entire metal in the positive active material is 1.01 or more and 1.2 or less.

7. The positive active material of claim 1, wherein:
    the positive active material has a c-axis lattice constant variation ratio of less than 2.5% for the R-3m structure under charge and discharge in the range of 2.5 V to 4.25 V.

8. The positive active material of claim 7, wherein:
    a maximum value of the c-axis lattice constant of the R-3m structure is less than 14.410 Å during charge and discharge in the range of 2.5 V to 4.25 V.

9. The positive active material of claim 8, wherein:
    the c-axis lattice constant of the R-3m structure changes within the range of 13.900 Å to 14.410 Å during charge and discharge in the range of 2.5 V to 4.25 V.

**10.** The positive active material of claim 1, wherein:
a bond length between metal and oxygen in the positive active material is less than 1.92 Å.

**11.** The positive active material of claim 1, wherein:
a content of $Li_2CO_3$ in the positive active material, as measured by X-ray diffraction analysis, is less than 0.5 wt%.

**12.** The positive active material of claim 1, wherein:
a content of $Li_2O$ in the positive active material, as measured by X-ray diffraction analysis, is less than 1.0 wt%.

**13.** The positive active material of any one of claim 1 to claim 12, wherein:
a nickel content in the positive active material is 90 mol% or more, with 100 mol% of metal as the reference.

**14.** A positive active material is:

a layered metal oxide crystal structure comprising a lithium layer and a metal layer,
wherein, the crystal structure includes a first metal layer in which some of the metal is replaced by lithium,
the crystal structure includes a first lithium layer in which some of the lithium in the lithium layer is replaced by metal, and
an amount of lithium substitution in the first metal layer is greater than the amount of metal substitution in the first lithium layer.

**15.** A method of manufacturing a positive active material, comprising:

preparing a metal hydroxide precursor and a lithium raw material; and
mixing and sintering the metal hydroxide precursor and the lithium raw material;
wherein, a sintering temperature is t, a mole ratio of lithium in the lithium raw material to metal in the metal oxide precursor is l/m,
the t is 780°C or less,
an equation 1 below is satisfied.

[Equation 1]

$$500 \leq t / (l/m) \leq 710$$

【FIG. 1】

【FIG. 2】

【FIG. 3】

【FIG. 4】

【FIG. 5】

【FIG. 6】

【FIG. 7】

EP 4 546 464 A1

【FIG. 8】

25

【FIG. 9】

【FIG. 10】

【FIG. 11】

【FIG. 12】

【FIG. 13】

Comparative Example

【FIG. 14】

Example

【FIG. 15】

Example

Voltage vs Capacity (mAh g$^{-1}$)

Li 1.014
Li 1.03
Li 1.074
Li 1.13

【FIG. 16】

Comparative Example

【FIG. 17】

Example

Legend:
○ Li 1.013
● Li 1.03
▨ Li 1.048
◉ Li 1.13

X-axis: Cycle
Y-axis: Capacity (mAh / g)

【FIG. 18】

Example

[FIG 19]

【FIG. 20】

## INTERNATIONAL SEARCH REPORT

| International application No. |
| --- |
| **PCT/KR2023/008637** |

**A.      CLASSIFICATION OF SUBJECT MATTER**

**H01M 4/525**(2010.01)i; **H01M 4/505**(2010.01)i; **C01G 53/00**(2006.01)i; **H01M 10/052**(2010.01)i

According to International Patent Classification (IPC) or to both national classification and IPC

**B.      FIELDS SEARCHED**

Minimum documentation searched (classification system followed by classification symbols)
H01M 4/525(2010.01); H01M 10/052(2010.01); H01M 10/0525(2010.01); H01M 4/485(2010.01); H01M 4/505(2010.01)

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & keywords: 층상(layered), 치환(doping), 리튬(lithium), 몰(mol), 금속(metal)

**C.      DOCUMENTS CONSIDERED TO BE RELEVANT**

| Category* | Citation of document, with indication, where appropriate, of the relevant passages | Relevant to claim No. |
| --- | --- | --- |
| X | KR 10-2012-0030013 A (LG CHEM, LTD.) 27 March 2012 (2012-03-27)<br>    See paragraph [0025]; and claims 1 and 11. | 1-11,13-14 |
| Y | | 12 |
| A | | 15 |
| Y | KR 10-2019-0001191 A (INDUSTRY ACADEMY COOPERATION FOUNDATION OF SEJONG UNIVERSITY) 04 January 2019 (2019-01-04)<br>    See paragraphs [0009] and [0011]. | 12 |
| X | KR 10-2020-0135356 A (SUMITOMO CHEMICAL CO., LTD.) 02 December 2020 (2020-12-02)<br>    See paragraph [0235]. | 15 |
| A | KR 10-2017-0075596 A (POSCO et al.) 03 July 2017 (2017-07-03)<br>    See claim 1. | 1-15 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **26 September 2023** | **26 September 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/008637**

**C.      DOCUMENTS CONSIDERED TO BE RELEVANT**

| Category* | Citation of document, with indication, where appropriate, of the relevant passages | Relevant to claim No. |
|---|---|---|
| A | KR 10-2017-0113385 A (LG CHEM, LTD.) 12 October 2017 (2017-10-12)<br>See paragraphs [0051], [0061] and [0140]; and claim 1. | 1-15 |

Form PCT/ISA/210 (second sheet) (July 2022)

## INTERNATIONAL SEARCH REPORT
### Information on patent family members

International application No.

**PCT/KR2023/008637**

| Patent document cited in search report | | | Publication date (day/month/year) | Patent family member(s) | | | Publication date (day/month/year) |
|---|---|---|---|---|---|---|---|
| KR | 10-2012-0030013 | A | 27 March 2012 | CN | 103109401 | A | 15 May 2013 |
| | | | | CN | 103109401 | B | 03 August 2016 |
| | | | | EP | 2618408 | A2 | 24 July 2013 |
| | | | | JP | 2013-538003 | A | 07 October 2013 |
| | | | | JP | 5601740 | B2 | 08 October 2014 |
| | | | | KR | 10-1326088 | B1 | 07 November 2013 |
| | | | | US | 2013-0177816 | A1 | 11 July 2013 |
| | | | | US | 9780371 | B2 | 03 October 2017 |
| | | | | WO | 2012-036474 | A2 | 22 March 2012 |
| | | | | WO | 2012-036474 | A3 | 28 June 2012 |
| KR | 10-2019-0001191 | A | 04 January 2019 | KR | 10-2063898 | B1 | 08 January 2020 |
| KR | 10-2020-0135356 | A | 02 December 2020 | CN | 111902366 | A | 06 November 2020 |
| | | | | EP | 3778492 | A1 | 17 February 2021 |
| | | | | JP | 2019-172530 | A | 10 October 2019 |
| | | | | JP | 6542421 | B1 | 10 July 2019 |
| | | | | US | 2021-0098776 | A1 | 01 April 2021 |
| | | | | WO | 2019-189425 | A1 | 03 October 2019 |
| KR | 10-2017-0075596 | A | 03 July 2017 | | None | | |
| KR | 10-2017-0113385 | A | 12 October 2017 | CN | 108140831 | A | 08 June 2018 |
| | | | | CN | 108140831 | B | 30 March 2021 |
| | | | | EP | 3331070 | A1 | 06 June 2018 |
| | | | | EP | 3331070 | B1 | 15 May 2019 |
| | | | | KR | 10-1992760 | B1 | 26 June 2019 |
| | | | | US | 2019-0027748 | A1 | 24 January 2019 |
| | | | | US | 2022-0310996 | A1 | 29 September 2022 |
| | | | | WO | 2017-171462 | A1 | 05 October 2017 |

Form PCT/ISA/210 (patent family annex) (July 2022)